# EUROPÄISCHE PATENTSCHRIFT

(11) **EP 0 739 674 B1**
(45) Veröffentlichungstag und Bekanntmachung des Hinweises auf die Patenterteilung: **19.04.2000**
(21) Anmeldenummer: 96102136.7
(22) Anmeldetag: 14.02.1996
(51) Int. Cl.: B23D 43/02, B23F 21/26

(54) **Innen-Räumwerkzeug zum Innen-Räumen von Profilen**
Internal broaching tool for internal broaching of profiles
Outil de brochage interne pour le brochage interne de profiles

(30) Priorität: 28.04.1995 DE 19515590
(43) Veröffentlichungstag der Anmeldung: 30.10.1996
(73) Patentinhaber: Oswald Forst Maschinenfabrik und Apparatebauanstalt GmbH & Co Kommanditgesellschaft, 42659 Solingen (DE)
(72) Erfinder: Melcher, Reinhard, D-42655 Solingen (DE); Holstein, Herbert, D-42651 Solingen (DE)
(74) Vertreter: Rau, Manfred, Dr. Dipl.-Ing.

(56) Entgegenhaltungen:
- US-A- 2 986 801
- US-A- 3 022 710
- US-A- 3 231 962
- US-A- 3 293 988

## Beschreibung

Die Erfindung betrifft ein Innen-Räumwerkzeug zum Innen-Räumen von jeweils durch einen Profilgrund und Profilflanken begrenzten Profilen, insbesondere von Innenverzahnungen, in einem Werkstück gemäß dem Oberbegriff des Anspruchs 1 und wie z.B. aus US-A-2 986 801 bekannt.

Die zum Innen-Räumen von Profilen üblicherweise eingesetzten Innen-Räumwerkzeuge sind aus DIN 1415 (Ausgabe 1973), Blatt 1, Seite 2 bekannt. Sie weisen einen Schaft, einen Zahnungsteil und ein Endstück auf. Der Schaft wird von einem Schafthalter einer Räummaschine gehalten, welcher das Räumwerkzeug durch ein in der Räummaschine gehaltenes Werkstück zieht und hierbei die Profile räumt. Das Endstück wird nach dem Räumvorgang von einem Endstückhalter der Räummaschine ergriffen, der das Räumwerkzeug nach dem Räumvorgang in seine Ausgangsposition zurücktransportiert. Der Zahnungsteil weist entgegen der Räumrichtung hintereinander mehrere Reihen von Räumzähnen auf, und zwar in der Regel eine große Zahl solcher Reihen von Räumzähnen. Die Räumzähne weisen Profilgrund-Schneiden zum Schneiden des Profilgrundes eines Profils und Profilflanken-Schneiden zum Schneiden der Profilflanken des Profils auf. Die zum Schneiden eines Profils dienenden, entgegen der Räumrichtung hintereinander angeordneten und insoweit einander zugeordneten Räumzähne weisen eine Tiefenstaffelung, d.h. eine Durchmessersteigung auf, so daß alle zum Schneiden eines Profils dienenden Räumzähne nacheinander einen zur Erzeugung des Profilgrundes dienenden Span schneiden. Da die Profilgrund-Schneiden die Hauptspanungsleistung erbringen, werden sie auch als Hauptschneiden bezeichnet. Soweit es um das Schneiden der Profilflanken des Profils geht, weisen die entgegen der Räumrichtung hintereinander angeordneten Räumzähne Profilflanken-Schneiden mit einem Profilgefälle auf, wie es in DIN 1415 (Ausgabe 1973) Blatt 1 Seite 3 Bild 11 dargestellt ist. Die Profilflanken-Schneiden werden auch als Nebenschneiden bezeichnet. Das Profilgefälle wird dadurch erzeugt, daß die Profilflanken-Schneiden eines nachfolgenden Räumzahns bezogen auf die Profilflanken-Schneiden eines voreilenden Räumzahns mit einer seitlichen Freilage versehen werden, so daß der nachfolgende Räumzahn nur in dem durch die Durchmessersteigung bzw. Tiefenstaffelung vorgesehenen Bereich mit seinen Profilflanken-Schneiden schneidet, während er in dem Bereich, in dem der voreilende Räumzahn mit seinen Profilflanken-Schneiden geschnitten hat, nicht zum Eingriff am Werkstück kommt. Hierdurch wird ein Klemmen der Räumzähne im Bereich der Profilflanken während des Räumvorganges verhindert. Die Profilflanken erhalten hierdurch eine treppenförmige Oberflächenstruktur.

Die mit dem bekannten und üblichen Innenräumwerkzeug erzeugten Profile weisen für normale Anwendungs- bzw. Bedarfsfälle eine ausreichende Oberflächengüte, Profilformgenauigkeit und Profilliniengenauigkeit auf. Während des Räumvorganges kann eine Verlagerung der Achse des Räumwerkzeuges stattfinden, so daß die nacheinander zum Eingriff kommenden Räumzähne jeweils eine unterschiedliche Mittenlage relativ zum zu räumenden Werkstück haben. Insbesondere beim Drallräumen (Schraubräumen) kann einer solchen Verlagerung der Achse des Räumwerkzeuges ein Torsionsfehler überlagert werden, welcher durch rotatorische Kräfte beim Drallräumen hervorgerufen wird. Die Profilformgenauigkeit und die Oberflächengüte der Profilflanken sind hierbei oft nicht ausreichend, wenngleich die Flankenliniengenauigkeit in der Regel zufriedenstellend ist. Insbesondere bei Laufverzahnungen, z.B. innenverzahnten Zahnrädern mit einer Gerad- oder Schräg-Verzahnung, werden hohe Profilformgenauigkeiten und Flankenliniengenauigkeiten gefordert.

Um die geschilderten Mängel bei entsprechend hohen Anforderungen zu beseitigen, ist es bekannt, den mit Profilgefälle ausgestalteten Räumzähnen - bezogen auf die Räumrichtung - am Räumwerkzeug noch einen Kalibrierbereich nachzuordnen. Ein solcher Kalibrierbereich besteht aus mehreren hintereinander angeordneten Räumzähnen gleicher Höhe, die also den Profilgrund nicht nachschneiden. Sie weisen jedoch entgegen der Räumrichtung größer werdende Zahndicken auf, d.h. alle Kalibrier-Räumzähne schneiden über die volle Flankenhöhe der Profilflanke einen Span, dessen Spandicke im allgemeinen 10 bis 20 µm beträgt. Die Kalibrier-Räumzähne müssen an jeder Profilflanken-Schneide mit einem Freischliff, d.h. einem Freiwinkel, versehen sein. Sie weisen also einen Hinterschliff auf. Durch das Kalibrierräumen wird eine gute Profilformgenauigkeit und eine hohe Oberflächengüte erreicht. Hinsichtlich der Flankenliniengenauigkeit tritt im Verhältnis zum zuvor in Tiefenstaffelung geräumten Profil eine Verschlechterung ein. Dies ergibt sich daraus, daß die hinterschliffenen Profilflanken-Schneiden der Kalibrierräumzähne scharfe Schneiden sind, deren Eigenführungsverhalten relativ schlecht ist.

Beim Wechsel von tiefengestaffelten Räumen zum Vollformkalibrieren tritt systembedingt eine Räumkraftunterbrechung auf, die insbesondere beim Drallräumen zu erheblichen Nachteilen führt. Hierbei führt eine Entlastung der entgegen der Räumrichtung wirkenden Hauptschnittkraft auch zu einer Reduktion der Torsionsspannung, d.h. die relative Torsion zwischen Werkstück und Innen-Räumwerkzeug verändert sich. Diese Veränderung kann so stark sein, daß der Vollformkalibrierschneidteil nicht richtig in die unter Tiefenstaffelung geräumten Profile eingeführt wird und deshalb derart einseitig die Profilflanken anschneidet, daß das Profil nicht an seinen beiden Profilflanken kalibriert wird. Aufgrund der geschilderten Mängel des beim tiefengestaffelten Räumen erzeugten Profils schneiden die Profilflanken-Schneiden der Kalibrier-Räumzähne ungleichmäßig in die treppenförmig ausgebildeten Profilflanken, wodurch wiederum Torsionsschwingungen entstehen, die sich negativ auf die Profilliniengenauigkeit auswirken können.

Aus der US 2 986 801 ist ein Innen-Räumwerkzeug zum Innenräumen von jeweils durch einen Profilgrund und Profilflanken begrenzten Innenverzahnungen in einem Werkstück bekannt. Die Profilgrund-Schneiden hintereinander angeordneter und einander zugeordneter Räumzähne weisen eine positive Durchmessersteigung gegenüber den in Räumrichtung jeweils voreilenden Räumzähnen auf. Die Profilflanken-Schneiden hintereinander angeordneter und einander zugeordneter Räumzähne weisen über ihre volle Profilhöhe eine negative Profilsteigung auf. Dies heißt, daß hintereinander angeordnete Räumzähne bei zunehmendem Durchmesser jeweils schmalere Profile aufweisen. Die sich daraus ergebenden Nachteile entsprechen den oben zu DIN 1415 (Ausgabe 1973) beschriebenen Nachteilen.

Der Erfindung liegt die Aufgabe zugrunde, ein Innen-Räumwerkzeug zu schaffen, das hohe Oberflächengüte, Profilformgenauigkeit und Flankenliniengenauigkeit der zu räumenden Profile gewährleistet.

Diese Aufgabe wird erfindungsgemäß durch die Merkmale des Kennzeichnungsteils des Anspruches 1 gelöst. Mit dem erfindungsgemäßen Innen-Räumwerkzeug wird die Hauptschnittleistung durch die Tiefenstaffelung der Räumzähne, also mit den Hauptschneiden, den Profilgrund-Schneiden, erbracht. Die Profilflanken-Schneiden weisen jedoch anders als beim Stand der Technik kein Profilgefälle, sondern eine Profilsteigung auf. Das bedeutet, daß jeder Räumzahn etwas dicker ist als der nächst voreilende Räumzahn. Die Profilsteigung wird dabei so gewählt, daß jeder Räumzahn die möglicherweise vom voreilenden Räumzahn herrührenden Verzerrungen ausgleichen kann. Die Spandicken sind erheblich kleiner als die bei der Vollformkalibrierung erzeugten Spandicken. Die Profilflanken-Schneiden führen im Prinzip nur ein Nachschaben der gesamten zuvor geräumten Profilflanke aus. Wegen der geringen Dicke der mittels der Profilflanken-Schneiden geschabten Späne tritt eine gute Eigenführung der Räumzähne an den Profilflanken des zu räumenden Profils auf.

Wegen des guten Eigenführungsverhaltens des Räumwerkzeuges wird eine gute Flankenliniengenauigkeit erreicht. Eine gute Profilform wird dadurch erzeugt, daß Fehler durch eine Verlagerung der Achse des Räumwerkzeugs durch die nachfolgenden Zähne sofort ausgeglichen werden. Eine gute Oberfläche der geräumten Profilflanken wird dadurch erreicht, daß die gesamten bereits erzeugten Profilflanken nachgeschabt werden. Eine Räumkraftunterbrechung und die damit verbundenen Nachteile treten bei Innen-Räumwerkzeugen nach der Erfindung nicht auf. Beim Innen-Räumwerkzeug nach der Erfindung tritt über den gesamten Räumhub ein stetiger Kräfteverlauf, und zwar sowohl in Richtung der Hauptschnittkraft, also in Richtung der Zugkraft, als auch in Torsionsrichtung, auf.

Die Ansprüche 2 und 3 geben Maßbereiche für die Profilsteigung an, die dafür ursächlich ist, daß die Profilflanken-Schneiden primär einen Nachschabe-Effekt ausüben. Wegen des Nachschabe-Effektes können die Profilflanken-Schneiden gemäß Anspruch 4 mit einem Freischliff versehen sein, ohne daß dadurch die Eigenführungseigenschaften der Räumzähne beeinträchtigt werden.

Beim Außen-Räumen von sogenannten Tannenbaumprofilen in Turbinenscheiben wird üblicherweise mit Außen-Räumwerkzeugen mit einer Tiefenstaffelung der Räumzähne vorgeräumt und nachfolgend mit vollformschneidenden Räumwerkzeugen kalibriert. Linearitätsfehler und Führungsprobleme treten hierbei nicht auf, da die Räumwerkzeuge auf dem Räummaschinenschlitten der Außen-Räummaschine starr geführt sind. Bei verschiedenen Turbinenwerkstoffen kann das Vollformkalibrieren aus zerspanungstechnischen Gründen nicht angewendet werden. Um Linearitätsfehler bei der Fertigung der Außen-Räumwerkzeuge und bei der Aufspanung der Außen-Räumwerkzeuge auf dem Räummaschinenschlitten ausgleichen zu können, werden Außen-Räumwerkzeuge mit tiefengestaffelten Räumzähnen mit einer äußerst geringen Profilsteigung eingesetzt. Die Räumzähne sind vollformhinterschliffen. Es geht hierbei nicht um eine Verbesserung des Eigenführungsverhaltens unter gleichzeitigem Ausgleich einer Verlagerung der Mittelachse des Räumwerkzeugs wie bei den nicht im Kontaktbereich zwischen Räumwerkzeug und Werkstück extern geführten Innen-Räumwerkzeugen.

Die Erfindung wird nachfolgend anhand der Zeichnung näher erläutert. Es zeigt
- Fig. 1: ein Innen-Räumwerkzeug,
- Fig. 2: ein mit Profilen in Form einer Innenverzahnung versehenes Werkstück,
- Fig. 3: das Räumen eines Profils nach dem Stand der Technik mit Tiefenstaffelung,
- Fig. 4: beim Räumen nach Fig. 3 auftretende Profilfehler,
- Fig. 5: das Profilflankenkalibrieren eines mit einem Profilfehler nach Fig. 4 versehenen Profils und
- Fig. 6: das Innen-Räumen eines Profils mit einem Innen-Räumwerkzeug nach der Erfindung.

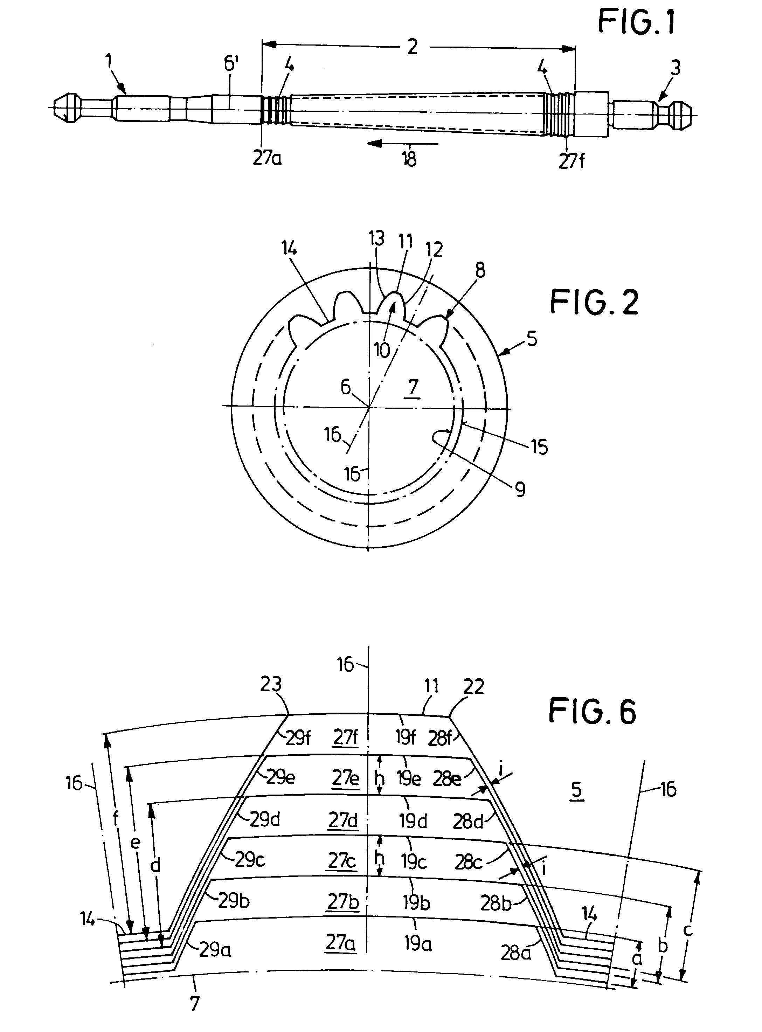

Das in Fig. 1 dargestellte und in seinem Aufbau bekannte Innen-Räumwerkzeug weist einen Schaft 1, einen Zahnungsteil 2 und hieran anschließend ein Endstück 3 auf. Auf dem Zahnungsteil 2 sind zahlreiche Reihen 4 von Räumzähnen angebracht. Mit dem Innen-Räumwerkzeug wird ein beispielsweise ringförmiges Werkstück 5 bearbeitet. Dieses weist bereits vor dem Räumen eine zur Mittel-Längs-Achse 6 des fertig bearbeiteten Werkstücks 5 konzentrische Bohrung 7 auf. Das Werkstück 5 wird auf eine Werkstückvorlage einer Innen-Räummaschine gelegt; anschließend wird der Schaft 1 des Räumwerkzeuges durch die Bohrung 7 geführt und von einem Schafthalter ergriffen, der in Richtung der Achse 6' des Räumwerkzeuges antreibbar ist und das Räumwerkzeug durch das Werkstück 5 zieht. Hierbei werden Profile 8, beispielsweise eine Innenverzahnung, in den Innenumfang 9 des Werkstücks 5 geräumt. Das Innen-Räumwerkzeug wird hierbei nicht zwangsgeführt; es tritt eine Eigenführung bzw. Eigenzentrierung zwischen Werkstück und Räumwerkzeug ein. Das Endstück 3 dient primär zum Rücktransport des Innen-Räumwerkzeugs nach einem Räumhub.

Die zu räumenden Profile 10 weisen einen Profilgrund 11, zwei einander gegenüberliegende Profilflanken 12, 13 und einen Profilsteg 14 auf, der die einander benachbarten Profilflanken 12, 13 zweier einander benachbarter Profile 10 miteinander verbindet. Die Profilflanken 12, 13 eines Profils 10 bilden mit dem Profilgrund 11 eine Ecke. Beim Räumen der Profile 8 wird die Bohrung 7 zu einer durch die Profilstege 14 begrenzten Ausnehmung 15 aufgeweitet. Das Räumen des Werkstücks 5 im Bereich der zu erzeugenden Profilstege 14 wird nachfolgend nicht erläutert, da es für das Verständnis der Erfindung ohne Bedeutung ist. Es wird nachfolgend das Räumen eines Profils 8 mit unterschiedlich ausgestalteten Räumzähnen beschrieben, wobei das Profil 8 zwischen zwei Radien 16 durch die Achse 6 angeordnet ist, die jeweils an das Profil 8 anschließende Profilstege 14 halbieren.

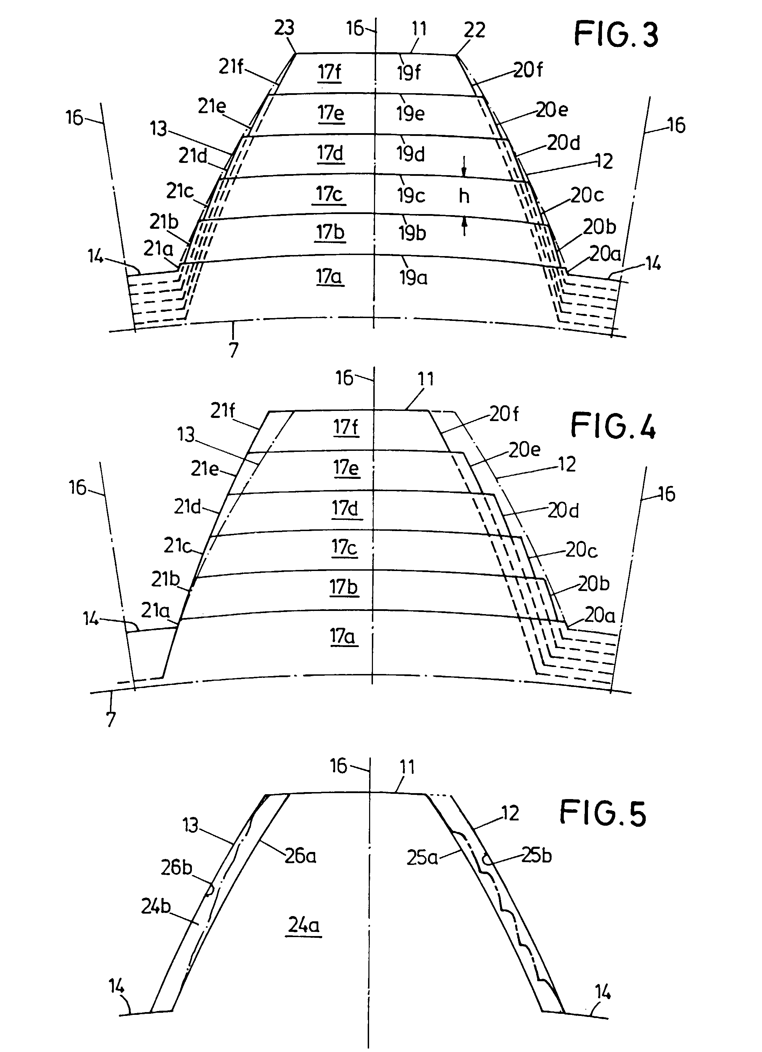

Bei der nach DIN 1415 (Ausgabe 1973) bekannten Ausgestaltung eines Innen-Räumwerkzeugs weist dieses Räumzähne 17 auf, von denen der als erster in Eingriff kommende erste Räumzahn mit 17a, weitere Räumzähne mit 17b, 17c, 17d, 17e und der zuletzt in Eingriff kommende Räumzahn mit 17f bezeichnet sind. Auch wenn insgesamt nur sechs Räumzähne dargestellt sind, sind an einem praxisgemäßen Räumwerkzeug mindestens abhängig von der zu erzeugenden Profiltiefe die fünf- bis zwanzigfache Zahl von Räumzähnen vorhanden. Die Räumzähne 17a bis 17f sind am Räumwerkzeug entgegen der Räumrichtung 18 angeordnet. Die Räumzähne 17a bis 17f weisen jeweils eine Profilgrund-Schneide 19a bis 19f auf,die einen Verlauf entsprechend einem zur Achse 6' konzentrischen Kreis aufweist, wobei ergänzt sei, daß die Achse 6' des Räumwerkzeugs und die Achse 6 des Werkstücks 5 grundsätzlich zusammenfallen sollen. Die Profilgrund-Schneiden 19a bis 19f sind in üblicher Weise mit einem Freischliff, d.h. einem Freiwinkel, versehen. Die Räumzähne 17a bis 17f sind weiterhin mit Profilflanken-Schneiden 20a bis 20f bzw. 21a bis 21f versehen. Während die Profilgrund-Schneiden 19a bis 19f als Hauptschneiden dienen, sind die Profilflanken-Schneiden 20a bis 20f bzw. 21a bis 21f sogenannte Nebenschneiden. Die Profilflanken-Schneiden 20a bis 20f bzw. 21a bis 21f schneiden die Profilgrund-Schneiden 19a bis 19f in Schneidenecken 22 bzw. 23. Nur diese Schneidenecken 22 bzw. 23 liegen jeweils auf der in Fig. 3 gestrichelt eingezeichneten Soll-Profilflanke 12 bzw. 13 des Profils 10. Die Profilflanken-Schneiden 20a bis 20f bzw. 21a bis 21f weisen ein Profilgefälle auf, d.h. sie sind gegenüber den an sich zu erzeugenden Soll-Profilflanken 12, 13 freigelegt. Die Profilflanken-Schneiden 20a bis 20f bzw. 21a bis 21f schneiden also jeweils nur in dem Bereich einen Span, in dem die Profilgrund-Schneide 19b bis 19f bezogen auf eine unmittelbar voreilende Profilgrund-Schneide 19a bis 19e zum Eingriff am Werkstück 5 kommt. Mit anderen Worten schneidet sie nur in dem durch die Durchmessersteigung h der Profilgrund-Schneiden 19a bis 19f jeweils vorgegebenen Bereich. Wie Fig. 3 erkennen läßt, werden somit nicht die Soll-Profilflanken 12, 13, sondern Profilflanken mit einem treppenförmigen Verlauf erzeugt, wie er durch den Verlauf der in Fig. 3 dargestellten Profilflanken-Schneiden 20a bis 20f bzw. 21a bis 21f dargestellt ist.

Bei diesem bekannten Räumen mit Tiefenstaffelung und Profilgefälle können weitere in Fig. 4 dargestellte Profilfehler durch ein Abtreiben des Innen-Räumwerkzeugs auftreten. Hierbei verlagert sich die Mittel-Längs-Achse 6' des Innen-Räumwerkzeugs während des Räumvorgangs fortlaufend gegenüber der Mittel-Längs-Achse 6 des Werkstücks 5. Die Achsen 6' und 6 wandern also während des Räumvorganges auseinander. Das tatsächlich erzeugte Profil ist in Fig. 4 durch den Verlauf der Profilflanken-Schneiden 20a bis 20f bzw. 21a bis 21f und die Profilgrund-Schneide 19f des letzten Räumzahnes 17f dargestellt. Aus Fig. 4 ergibt sich auch die Abweichung dieses tatsächlich erzeugten Profils von dem gestrichelt dargestellten Sollverlauf der Profilflanken 12 und 13.

In Fig. 5 ist dargestellt, wie das nach den Fig. 3 bzw. 4 geräumte Profil im Bereich der Profilflanken kalibriert wird. Von den - bezogen auf die Räumrichtung 18 hinten liegenden - Kalibrier-Räumzähnen 24 sind nur zwei Kalibrier-Räumzähne, nämlich der erste Räumzahn 24a und der letzte Räumzahn 24b dargestellt. Die Räumzähne 24a und 24b weisen nur Profilflanken-Schneiden 25a, 25b bzw. 26a, 26b und hier nicht bedeutsame Kalibrierschneiden für die Profilstege 14 auf. Der Profilgrund 11 wird von den Kalibrier-Räumzähnen 24a, 24b nicht geräumt. Wenn die tatsächlich geräumten Profilflanken den Verlauf nach Fig. 3 haben, dann werden mittels der Profilflanken-Schneiden 25a, 25b bzw. 26a, 26b die Profilflanken in der Weise nachgeräumt, bis die letzten Profilflanken-Schneiden 25b bzw. 26b die Soll-Profilflanken 12, 13 erzeugen.

Wenn dagegen die tatsächlich geschnittenen Profilflanken den in Fig. 4 dargestellten Verlauf haben, der in Fig. 5 strichpunktiert angedeutet ist, dann ergeben sich - wie aus Fig. 5 anschaulich wird - erhebliche Schwierigkeiten beim Kalibrieren, da die Profilflanken-Schneiden 25a, 25b und 26a, 26b bedingt durch das asymmetrisch vorgeräumte Profil erheblich mehr Werkstoff vom Werkstück 5 abtragen müssen als beim symmetrisch vorgeräumten Profil gemäß Fig. 3.

Bei dem in Fig. 6 dargestellten Ausführungsbeispiel nach der Erfindung weist der Zahnungsteil 2 des in Fig. 1 dargestellten Räumwerkzeugs zum Räumen jedes Profils 8 im Werkstück 5 Räumzähne 27a bis 27f auf, wobei auch hier gilt, daß die tatsächliche Zahl der Reihen 4 von Räumzähnen 27 abhängig von der zu erzeugenden Profiltiefe um das Fünf- bis Zwanzigfache größer ist. Die Räumzähne 27a bis 27f weisen Profilgrund-Schneiden 19a bis 19f wie die Räumzähne nach den Fig. 3 und 4 auf, die in gleicher Weise wie bei der bekannten Ausführungsform den Profilgrund 11 erzeugen.Sie weisen ebenfalls eine Durchmessersteigung h und einen Freiwinkel auf. Die Profilflanken-Schneiden 28b bis 28f bzw. 29b bis 29f weisen dagegen über ihre radial zur Achse 6 gemessene volle Profilhöhe a bis f gegenüber der jeweils vorhergehenden Profilflanken-Schneide 28a bis 28e bzw. 29a bis 29e eine Profilsteigung i auf, so daß die Profilflanken-Schneiden 28a bis 28f bzw. 29a bis 29f jeweils über ihre volle Länge schneiden. Für die Profilsteigung i gilt i < 5 µm und insbesondere 1 µm < i < 3 µm. Aus diesen Maßen folgt, daß die von den Profilflanken-Schneiden 28a bis 28f bzw. 29a bis 29f geschnittenen Späne so dünn sind, daß tatsächlich nur ein Schaben stattfindet. Für die Durchmessersteigung h gilt als üblicher Wert 0,03 mm < h < 0,1 mm. Die Profilflanken weisen regelmäßig einen Freischliff, d.h. einen Freiwinkel, auf, ohne daß das Eigenführungsverhalten beeinträchtigt wird. Sie durchdringen ebenfalls die Profilgrund-Schneiden 19a bis 19f in Schneidenecken 22, 23. Die Profilsteigung i und/oder die Durchmessersteigung h können über die Länge des Räumwerkzeuges von Räumzahn zu Räumzahn variieren.

## Patentansprüche

1. Innen-Räumwerkzeug zum Innen-Räumen von jeweils durch einen Profilgrund (11) und Profilflanken (12, 13) begrenzten Innenverzahnungen, in einem Werkstück (5), mit folgenden Merkmalen:
- Es weist einen Schaft (1) und einen Zahnungsteil (2) auf, wobei der Schaft (1) in Räumrichtung (18) voreilend ist.
- Der Zahnungsteil (2) ist mit mehreren entgegen der Räumrichtung (18) hintereinander angeordneten Reihen (4) von Räumzähnen (27a bis 27f) versehen, wobei jeweils hintereinander angeordnete Räumzähne (27a bis 27f) zum Räumen eines Profils (8) einander zugeordnet sind.
- Die Räumzähne (27a bis 27f) weisen Profilgrund-Schneiden (19a bis 19f) und Profilflanken-Schneiden (28a bis 28f; 29a bis 29f) auf, wobei jeweils die Profilflanken-Schneiden (28a bis 28f; 29a bis 29f) die Profilgrund-Schneiden (19a bis 19f) in Schneidenecken (22, 23) durchdringen.
- Die Profilgrund-Schneiden (19b bis 19f) hintereinander angeordneter und einander zugeordneter Räumzähne (27b bis 27f) weisen eine Durchmessersteigung h gegenüber den in Räumrichtung (18) jeweils voreilenden Räumzähnen (27a bis 27e) auf, für die gilt: h > 0.
- Die Profilgrund-Schneiden (19a bis 19f) weisen einen Freischliff auf.
- Es ist **dadurch gekennzeichnet, daß** die Profilflanken-Schneiden (28a bis 28f; 29a bis 29f) hintereinander angeordneter und einander zugeordneter Räumzähne (27a bis 27f) über ihre volle Profilhöhe a, b, c, d, e, f eine Profilsteigung i aufweisen, die bezogen auf die Durchmessersteigung h der Profilgrund-Schneiden (19a bis 19f) klein ist und für die gilt: i > 0.

2. Innen-Räumwerkzeug nach Anspruch 1, wobei für die Profilsteigung i gilt: i < 5 µm.

3. Innen-Räumwerkzeug nach Anspruch 2, wobei für die Profilsteigung i gilt: 1 µm < i < 3 µm.

4. Innen-Räumwerkzeug nach einem der Ansprüche 1 bis 3, wobei die Profilflanken-Schneiden (28a bis 28f; 29a bis 29f) mit einem Freischliff versehen sind.

5. Innen-Räumwerkzeug nach einem der Ansprüche 1 bis 4, wobei die Durchmessersteigung h und/oder die Profilsteigung i über die Länge des Räumwerkzeuges von Räumzahn zu Räumzahn variieren.

## Claims

1. An internal broach for the internal broaching of internal toothings defined by a profile bottom (11) and profile flanks (12, 13) in a workpiece (5), comprising the following features:
- It comprises a shank (1) and a toothed portion (2), the shank (1) leading in the direction of broaching (18).
- The toothed portion (2) is provided with several rows (4) of broach cutting teeth (27a to 27f) disposed one after the other counter to the direction of broaching, broach cutting teeth (27a to 27f) that are disposed one after the other being allocated to each other for the broaching of a profile (8).
- The broach cutting teeth (27a to 27f) have bottom-cutting edges (19a to 19f) and flank-cutting edges (28a to 28f; 29a to 29f), the flank-cutting edges (28a to 28f; 29a to 29f) passing through the bottom-cutting edges (19a to 19f) in cutting-edge corners (22, 23).
- The bottom-cutting edges (19b to 19f) of broach cutting teeth (27b to 27f) disposed one after the other and allocated to each other have an ascending diameter h with respect to the broach cutting teeth (27a to 27e) leading in the direction of broaching (18), to which h > 0 applies.
- The bottom-cutting edges (19a to 19f) have a relief.
- It is **characterized in that** over their full profile height a, b, c, d, e, f, the flank-cutting edges (28a to 28f; 29a to 29f) of broach cutting teeth (27a to 27f) disposed one after the other and allocated to each other have an ascending profile i, which is minor referred to the ascending diameter h of the bottom-cutting edges (19a to 19f) and to which i >0 applies.

2. An internal broach according to claim 1, wherein i < 5 µm applies to the ascending profile i.

3. An internal broach according to claim 2, wherein 1 µm < i < 3 µm applies to the ascending profile i.

4. An internal broach according to one of claims 1 to 3, wherein the flank-cutting edges (28a to 28f; 29a to 29f) are provided with a relief.

5. An internal broach according to one of claims 1 to 4, wherein the ascending diameter h and/or the ascending profile i vary from broach cutting tooth to broach cutting tooth over the length of the broach.

## Revendications

1. Outil de brochage interne pour le brochage de dentures intérieures, délimitées respectivement par un fond de profilé (11) et par des flancs de profilé (12, 13), dans une pièce à oeuvrer (5), présentant les caractéristiques suivantes :
- il comporte un fût (1) et une partie dentée (2), le fût (1) s'étendant dans la direction de brochage (18),
- la partie dentée (2) est pourvue de plusieurs rangées (4) de dents de brochage (27a à 27f), agencées les unes derrière les autres en sens contraire à la direction de brochage (18), les dents de brochage (27a à 27b) respectivement agencées les unes derrière les autres pour le brochage d'un profilé (8) étant associées les unes aux autres,
- les dents de brochage (27a à 27f) comportent des tranchants (19a à 19f) destinés au fond de profilé et des tranchants (28a à 28f ; 29a à 29f) destinés aux flancs de profilé, et les tranchants destinés aux flancs de profilés (28a à 28f ; 29a à 29f) traversent les tranchants destinés au fond de profilé (19a à 19fj dans des coins de tranchants (22, 23) ;
- les tranchants destinés au fond de profilé (19b à 19f) appartenant à des dents de brochage (27b à 27f) agencées les unes derrière les autres et associées les unes aux autres présentent un accroissement de diamètre h vis-à-vis des dents de brochage (27a à 27e) disposées respectivement en avance dans la direction de brochage (18), tel que h > 0;
- les tranchants destinés au fond de profilé (19a à 19fj présentent un meulage libre ;
ledit outil étant caractérisé en ce que les tranchants destinés aux flancs de profilé (28a à 28f ; 29a à 29f) appartenant à des dents de brochage (27a à 27f) agencées les unes derrière les autres et associées les unes aux autres présentent sur la totalité de leur hauteur de profilé a, b, c, d, e, f, un accroissement de profilé i faible en relation à l'accroissement de diamètre h des tranchants destinés au fond de profilé (19a à 19f), et tel que i > 0.

2. Outil de brochage interne selon la revendication 1, dans laquelle l'accroissement de profilé i est tel que 1 micron < i < 5 microns.

3. Outil de brochage interne selon la revendication 2, dans lequel l'accroissement de profilé i est tel que 1 micron < i < 3 microns.

4. Outil de brochage interne selon l'une des revendications 1 à 3, dans lequel les tranchants destinés aux flancs de profilé (28a à 28f ; 29a à 29f) sont pourvus d'un meulage libre.

5. Outil de brochage interne selon l'une des revendications 1 à 4, dans lequel l'accroissement de diamètre h et/ou l'accroissement de profilé i varie sur la longueur de l'outil de brochage d'une dent de brochage à l'autre.
